# EUROPÄISCHE PATENTSCHRIFT

(11) **EP 0 967 405 B1**
(45) Veröffentlichungstag und Bekanntmachung des Hinweises auf die Patenterteilung: **09.11.2005**
(21) Anmeldenummer: 99111192.3
(22) Anmeldetag: 09.06.1999
(51) Int. Cl.: F16D 1/08

(54) **Anordnung zur Befestigung eines Rotors auf einer Welle**
Rotor-shaft fastening assembly
Dispositif de fixation d'un rotor sur un arbre

(30) Priorität: 26.06.1998 DE 19828525
(43) Veröffentlichungstag der Anmeldung: 29.12.1999
(73) Patentinhaber: Pfeiffer Vacuum GmbH, 35614 Asslar (DE)
(72) Erfinder: Lotz, Heinrich, 35578 Wetzlar (DE)

(56) Entgegenhaltungen:
- DE-A- 19 530 642
- DE-U- 9 016 961
- FR-A- 1 353 419
- US-A- 4 110 054

## Beschreibung

Die Erfindung betrifft eine Rotoranordnung nach dem Oberbegriff des 1. Patentanspruches.

Das feste und dauerhafte Verbinden von umlaufenden Teilen wie die verschiedenen Teile einer Welle oder im vorliegenden Fall einer Rotorwelle mit Rotorscheiben geschieht unter dem Gesichtspunkt, daß die Verbindung den Fliehkräften, welchen sie durch die Rotation ausgesetzt ist, standhalten muß.

Derartige Verbindungen, welche den Beanspruchungen durch Fliehkräfte standhalten, sind bekannt und werden z.B. durch Aufschrumpfen der Scheiben auf die Rotorwelle hergestellt. Dabei werden z.B. die Rotorwelle mit flüssigem Stickstoff abgekühlt und die Scheiben, deren Innendurchmesser geringfügig kleiner ist als der Außendurchmesser des Rotors auf ca. 150 °C erhitzt. Nach dem Zusammenfügen der Bauteile findet ein Temperaturausgleich statt, und eine dauerhafte feste Verbindung ist hergestellt. Da sich jetzt die Rotorwelle wieder ausdehnt, und der Innendurchmesser der Scheibe sich verringert hat, wirkt eine radial nach außen gerichtete Kraft, welche die Verbindungsstelle bereits im statischen Zustand durch die Schrumpfsitzspannung belastet. Dazu kommt während der Rotation eine dynamische Belastung, welche durch Fliehkräfte verursacht wird und in gleicher Richtung wirkt.

Dieser Effekt hat je nach verwendetem Werkstoff mehr oder weniger nachteilige Auswirkungen auf das Festigkeitsverhalten.

Für Rotoren, welche mit hoher Drehzahl umlaufen, bringt die Verwendung von Aluminium oder Aluminiumlegierungen als Werkstoff große Vorteile. Neben dem geringen spezifischen Gewicht sprechen leichte Bearbeitung und geringe Herstellkosten für Bauteile aus diesen Werkstoffen. Aluminium und Aluminiumlegierungen haben allerdings auch die Eigenschaft, daß keine ausgeprägte Proportionalitätsgrenze vorhanden ist. Dadurch findet bei den gegebenen statischen und dynamischen Belastungen und den betriebsbedingten Temperaturen ein ständiges Kriechen statt. Dies gefährdet auf Dauer die Betriebssicherheit des Rotors. Somit werden den Drehzahlen, mit denen ein solcher Rotor betrieben werden kann, enge Grenzen gesetzt.

Radiale nach außen gerichtete Kräfte im Schrumpfsitz können im Zusammenwirken mit Inhomogenitäten im Material der Scheibe und undefinierten Spannungen zu tellerförmigen Verformungen der Scheibe führen. Diese wiederum können störende Schwingungen und somit einen unsicheren Lauf hervorrufen. Solche Verformungen sollen durch die erfindungsgemäße Anordnung vermieden werden.

Ein weiterer Nachteil des herkömmlichen Verfahrens ist, daß nach dem Aufschrumpfen durch den Abkühlvorgang undefinierbare und nichtreproduzierbare axiale Spalte zwischen den Scheiben entstehen. Durch die erfindungsgemäße Anordnung werden diese Spalte vermieden bzw. sie können definiert und reproduzierbar erzeugt werden.

Eine gattungsbildende Rotoranordnung ist aus der De 9016 961 U bekannt. Eine Rotorscheibe ist mit einer co-axialen Nut versehen. Keilkörper werden mittels Schrauben in die Nut gepreβt, wodurch die Rotorscheibe auf einer Rotorwelle befestigt wird.

Der Erfindung liegt die Aufgabe zugrunde, eine Rotoranordnung zu konstruieren, die eine dauerhafte Verbindung einer Rotorwelle mit Rotorscheiben darstellt. Die Anordnung soll auf einfache und kostengünstige Art herstellbar sein, und die vorher angeführten Nachteile von Rotoranordnungen mit aufgeschrumpften Scheiben nicht aufweisen. Insbesondere soll das umständliche Verfahren der Aufschrumpfung umgangen und zusätzliche Schrumpfspannungen, welche sich nachteilig auf das Festigkeitsverhalten von bevorzugten Leichtbauwerkstoffen wie Aluminium und Aluminiumlegierungen auswirken, vermieden werden.

Die Aufgabe wird durch die kennzeichnenden Merkmale des 1. Patentanspruches gelöst. Die Ansprüche 2 bis 4 stellen weitere Ausgestaltungsformen der Erfindung dar.

Die erfindungsgemäße Rotoranordnung ist geeignet, eine dauerhafte Verbindung zwischen einer Rotorwelle und Rotorscheiben herzustellen.

Die oben beschriebenen Nachteile der herkömmlichen, umständlichen Technik des Aufschrumpfens werden vermieden.

Durch Verwendung des gleichen Materials für den Klemmring und für die Rotorwelle entsprechend Anspruch 2 wird eine konstantbleibende Fixierung bei Temperaturerhöhung erreicht.

Steigt die Temperatur soweit an, daß die Kriechgrenze des Scheibenmaterials erreicht wird, garantiert die Ausführung nach Anspruch 3 eine konstante Fixierung durch den nichtkriechenden Ring.

Anordnungen, bei denen es möglich ist, die Rotorscheiben beidseitig mit Nut und Klemmring nach Anspruch 4 zu versehen, stellen eine noch stabilere und zuverlässigere Verbindung dar.

An Hand der Abbildungen 1 bis 3 soll die Erfindung näher erläutert werden.

Die Abbildung 1 zeigt einen Längsschnitt durch die erfindungsgemäße Anordnung.

Die Abbildung 2 zeigt einen vergrößerten Ausschnitt aus Abbildung 1.

Die Abbildung 3 zeigt einen Längsschnitt durch die erfindungsgemäße Anordnung mit beidseitiger Nut und Klemmring.

Mit 1 ist die Rotorwelle bezeichnet, auf der die Scheibe 2, welche mit einer inneren Öffnung versehen ist, so befestigt wird, daß eine dauerhafte Verbindung entsteht. Dazu ist die Scheibe 2 mit einer zur Rotorwelle 1 konzentrischen Nut 4 versehen. Der Klemmring 3, dessen Innendurchmesser etwas kleiner ist als der Innendurchmesser der Nut 4, wird in die Nut gepreßt.

Bei Rotation der Anordnung dehnt sich die Scheibe 2 und somit vergrößert sich ihr Innendurchmesser. Ist die Scheibe mit einer Nut 4 versehen, in die jedoch noch kein Klemmring eingepaßt ist, entsteht bei Rotation ein Kräftepaar F1, F2. Das dadurch erzeugte Drehmoment bewirkt ein Kippen der Fixierung, wodurch die Scheibe 2 im Bereich der Nut 4 fester an die Scheibe gedrückt wird.

Sobald ein Klemmring 3 in die Nut gepreßt ist, wirkt durch den Preßsitz (der Innendurchmesser des Klemmringes 3 ist kleiner als der Innendurchmesser der Nut 4) bereits im statischen Zustand, eine Kraft F3 in Richtung der Rotorwelle 1. Im dynamischen Zustand, d.h. bei Rotation der Anordnung, wird zwar die Komponente F2 des Kräftepaares größer, die entgegengesetzte Richtung wirkende Kraft F1 bewirkt jedoch, daß sich die Andruckfläche verkleinert. Dadurch verliert die Wirkung des Kräftepaares F1, F2 an Stabilität. Dieser Effekt wird jedoch durch die von dem eingepreßten Klemmring 3 verursachte Kraft F3 weit überkompensiert, so daß im Endeffekt auch im dynamischen Zustand ein fester Sitz der Scheiben auf dem Rotor resultiert.

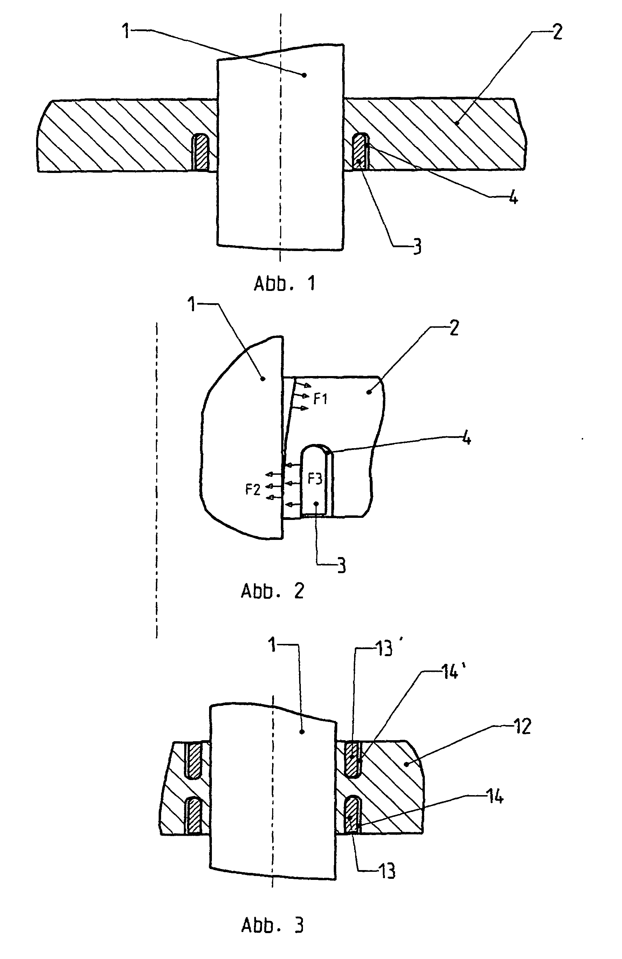

In Abbildung 3 ist eine Ausführungsform dargestellt, bei der auf beiden Seiten der Scheibe 12, Nuten 14, 14' und Klemmringe 13, 13' angebracht sind. Dadurch wird der vorteilhafte Effekt der Erfindung noch verstärkt.

## Patentansprüche

1. Rotoranordnung bestehend aus einer Rotorwelle (1) und mindestens einer Rotorscheibe (2), welche mit einer inneren Öffnung versehen ist, wobei zur Befestigung der Rotorscheibe (2) auf der Rotorwelle (1) die Rotorscheibe in der Nähe der inneren Öffnung mit einer koaxialen Nut (4) versehen ist, **dadurch gekennzeichnet, daß** in der Nut ein Klemmring (3) mit Preßsitz am Innendurchmesser der Nut (4) eingedrückt ist, wobei der Innendurchmesser des Klemmringes (3) kleiner ist als der Innendurchmesser der Nut (4).

2. Rotoranordnung nach Anspruch 1, **dadurch gekennzeichnet, daß** der Klemmring (3) aus dem gleichen Material besteht wie die Rotorwelle (1).

3. Rotoranordnung nach Anspruch 1, **dadurch gekennzeichnet, daß** der Klemmring (3) aus einem Material besteht, dessen Proportionalitätsgrenze größer ist als diejenige des Materials, aus dem die Rotorscheibe (2) besteht.

4. Rotoranordnung nach einem der vorhergehenden Ansprüche, **dadurch gekennzeichnet, daß** die Rotorscheibe (12) beidseitig mit koaxialen Nuten (14, 14') versehen ist und daß in die Nuten Klemmringe (13, 13') mit Preßsitz am Innendurchmesser der Nuten (14, 14') eingedrückt sind, wobei die Innendurchmesser der Klemmringe (13, 13') kleiner sind als die Innendurchmesser der Nuten (14, 14').

## Claims

1. Rotor arrangement consisting of a rotor shaft (1) and at least one rotor disc (2) which is provided with an inner opening, wherein the rotor disc is provided in the vicinity of the inner opening with a coaxial slot (4) in order to fasten the rotor disc (2) to the rotor shaft (1), **characterised in that** a clamping ring (3) is pressed into the slot with a press fit at the inside diameter of the slot (4), wherein the inside diameter of the clamping ring (3) is smaller than the inside diameter of the slot (4).

2. Rotor arrangement according to Claim 1, **characterised in that** the clamping ring (3) consists of the same material as the rotor shaft (1).

3. Rotor arrangement according to Claim 1, **characterised in that** the clamping ring (3) consists of a material whose proportionality limit is greater than that of the material of which the rotor disc (2) consists.

4. Rotor arrangement according to any one of the preceding Claims, **characterised in that** the rotor disc (12) is provided on both sides with coaxial slots (14, 14'), and that clamping rings (13, 13') are pressed into the slots with a press fit at the inside diameter of the slots (14, 14'), wherein the inside diameters of the clamping rings (13, 13') are smaller than the inside diameters of the slots (14, 14').

## Revendications

1. Agencement de rotor composé d'un arbre de rotor (1) et d'au moins un disque de rotor (2) comportant une ouverture intérieure, dans lequel le disque de rotor (2) -pour être fixé sur l'arbre de rotor (1)- est muni d'une rainure (4) coaxiale située à proximité de l'ouverture intérieure, **caractérisé en ce qu'**une bague de serrage (3) à ajustement forcé est insérée au niveau du diamètre intérieur de la rainure (4), le diamètre intérieur de la bague (3) étant plus petit que le diamètre intérieur de la rainure (4).

2. Agencement de rotor selon la revendication 1, **caractérisé en ce que** la bague de serrage (3) est composée de la même matière que l'arbre de rotor (1).

3. Agencement de rotor selon la revendication 1, **caractérisé en ce que** la bague de serrage (3) est composée d'une matière dont la limite de proportionalité est supérieure à celle de la matière du disque de rotor (2).

4. Agencement de rotor selon l'une quelconque des revendications précédentes, **caractérisé en ce que** le disque de rotor (12) comporte de chaque côté une rainure (14, 14') coaxiale et **en ce que** des bagues de serrage (13, 13') à ajustement forcé sont insérées au niveau du diamètre intérieur des rainures (14, 14'), le diamètre intérieur des bagues (13, 13') étant plus petit que le diamètre intérieur des rainures (14, 14').
